(19) Europäisches Patentamt
European Patent Office
Office européen des brevets

(11) **EP 1 912 154 A2**

## (12) EUROPEAN PATENT APPLICATION

(43) Date of publication:
**16.04.2008 Bulletin 2008/16**

(51) Int Cl.:
***G06F 21/20*** *(2006.01)*

(21) Application number: **07019301.6**

(22) Date of filing: **01.10.2007**

(84) Designated Contracting States:
**AT BE BG CH CY CZ DE DK EE ES FI FR GB GR HU IE IS IT LI LT LU LV MC MT NL PL PT RO SE SI SK TR**
Designated Extension States:
**AL BA HR MK RS**

(30) Priority: **13.10.2006 JP 2006280166**

(71) Applicant: **Hitachi, Ltd.**
**Chiyoda-ku**
**Tokyo 100-8280 (JP)**

(72) Inventors:
• **Hirata, Shinji**
**Chiyoda-ku**
**Tokyo 100-8220 (JP)**
• **Takahashi, Kenta**
**Chiyoda-ku**
**Tokyo 100-8220 (JP)**
• **Mimura, Masahiro**
**Chiyoda-ku**
**Tokyo 100-8220 (JP)**

(74) Representative: **Strehl Schübel-Hopf & Partner**
**Maximilianstrasse 54**
**80538 München (DE)**

(54) **System, server, terminal and tamper resistant device for authenticating a user**

(57) The authentication server authenticated by a public key certificate at the time of authentication generates a difference parameter, transforms a template by the difference parameter to create a temporary registration template, and transmits the difference parameter to a tamper resistant device. The tamper resistant device generates a temporary parameter from the held transformation parameter and the difference parameter. A client terminal transforms feature using the temporary parameter, and generates temporarily-transformed feature. An authentication server receives the temporarily-transformed feature, and verifies whether the temporary registration template is in agreement with the temporarily-transformed feature.

## FIG. 1

EP 1 912 154 A2

**Description**

BACKGROUND OF THE INVENTION

(1) Field of the Invention

The present invention relates to the user authentication technology which authenticates an individual using a biometric feature.

(2) Description of the Related Art

The user authentication system using biometric information acquires biometric information from a user at the time of registration, extracts the information called feature, and registers it as a template. At the time of authentication, the user authentication system acquires again the biometric information from the user to extract feature, compares it with the template, and judges whether the user is identical or not. When a server authenticates a user who is on the client side through a network, the client acquires the user's biometric information at the time of authentication, extracts feature, and transmits the extracted feature to the server. The server compares the received feature with the template which the server holds.

However, the template must be under strict management as personal information, requiring a high management cost. Moreover, since there is a limitation in the number of biometric information which a user has, a template cannot be changed easily. If a template should leak out, with resulting potential risk of counterfeit, it becomes impossible to use the biometric authentication. Furthermore, if such a case arises, even the other systems which have registered the same biometric information will be also exposed to the threat.

To cope with this problem, N. K. Ratha, J. H. Connell, R. M. Bolle, "Enhancing security and privacy in biometrics-based authentication systems", IBM Systems Journal, Vol. 40, No. 3, 2001 discloses a method of Cancelable Biometrics. In the method, at the time of registration, feature is transformed by a fixed function and a secret transformation parameter which a client possesses, and a template in which the original information is kept secret is put in custody of a server. At the time of authentication, the feature of biometric information newly extracted by the client is transformed by the same function and the same transformation parameter, and transmitted to the server, thereby allowing the server to receive the transformed feature and to compare it with the template. According to the method, the server cannot know the original feature at the time of authentication, because the client holds the transformation parameter secretly. Therefore, user's privacy can be protected. Moreover, even when the template is leaked out, it is thought that security can be maintained by changing the transformation parameter to a new one, and creating and registering a template again.

SUMMARY OF THE INVENTION

However, as to the system of which a template has leaked out, the problem is that impersonation by the illegal use of the template becomes possible. Moreover, when a parameter has leaked out from the client terminal and, at the same time, a template has leaked out from the server, there arises more serious problem that the original biometric information can be maliciously restored.

The present invention has been made in view of the above circumstances and realizes a cancelable biometric authentication system which prevents the impersonation by the illegal use of a template and also prevents the restoration of the original biometric information due to the leakage of a transformation parameter from the client terminal.

The present invention provides a user authentication system possessing an authentication server in which a user is authenticated based on the biometric information acquired by the client terminal. The user authentication system is composed of a tamper resistant device including a temporary parameter generator which keeps a parameter and generates a temporary parameter from the parameter and a difference parameter, and an output unit which outputs the temporary parameter to a client terminal. The authentication server is composed of a storage unit which stores a registration template created by transforming the biometric information with the parameter, a difference parameter generator which generates a difference parameter, a transform unit which transforms the registration template into a temporary registration template using the difference parameter, and a verification unit which verifies whether a temporary verification template inputted from the client terminal and the temporary registration template are in agreement. The client terminal is composed of an input unit which receives the temporary parameter from the tamper resistant device, a transform unit which transforms the biometric information at the time of authentication into the temporary verification template using the temporary parameter, and an output unit which outputs the temporary verification template to the authentication server.

Moreover, the present invention provides an authentication server, a terminal for clients, and a tamper resistant device which are employed in the user authentication system.

That is, the cancelable biometric authentication system of the present invention is composed of a tamper resistant device, a client terminal, and a server. The tamper resistant device holds a transformation parameter and a public key certificate of the server. The server holds a registration template. At the time of authentication, the tamper resistant device authenticates the server, using the public key certificate of the server. The server generates a difference parameter, transforms the registration template by the difference parameter to create a temporary registration template, and transmits the difference parameter to the tamper resistant device via the client terminal. The tamper resistant device generates a temporary parameter from the parameter held and the difference parameter received, and transmits the temporary parameter to the client terminal. The client terminal acquires biometric information, performs feature extraction, transforms the feature which is the biometric information using the temporary parameter, and generates a temporarily-transformed feature (temporary verification template). The server receives the temporarily-transformed feature and verifies whether the temporarily-transformed feature (temporary verification template) and the temporary registration template are in agreement.

In addition, in the present specification etc., a parameter means what is used in order to transform the feature which is biometric information. Moreover, a difference parameter is a parameter to perform updating for a template which has been registered in a server while kept secret, where the updating is performed in the server keeping the template secret.

The present invention realizes a cancelable biometric authentication system which can prevent the impersonation by the illegal use of a leaked-out template, by generating a temporary template to be used for verification, and which can prevent the restoration of the original biometric information due to the leakage of a parameter, by generating a temporary transformation parameter to be used for transformation. Thereby, the cancelable biometric authentication system which has high security and a high privacy protection effect is realizable.

BRIEF DESCRIPTION OF THE DRAWINGS

These and other features, objects and advantages of the present invention will become more apparent from the following description when taken in conjunction with the accompanying drawings wherein:

Fig. 1 is a block diagram illustrating a cancelable finger vein authentication system according to a first embodiment of the present invention;
Fig. 2 is a block diagram illustrating a functional composition of an authentication authority according to the first embodiment;
Fig. 3 is a block diagram illustrating a functional composition of an authentication server according to the first embodiment;
Fig. 4 is a block diagram illustrating a functional composition of a client terminal according to the first embodiment;
Fig. 5 is a block diagram illustrating a functional composition of a tamper resistant device according to the first embodiment;
Fig. 6 is an anterior half of a flow chart at the time of authentication for the cancelable finger vein authentication system according to the first embodiment;
Fig. 7 is a posterior half of the flow chart at the time of authentication for the cancelable finger vein authentication system according to the first embodiment; and
Fig. 8 is a block diagram illustrating an exemplified hardware composition of the authentication server and the client terminal according to the first embodiment.

DETAILED DESCRIPTION OF THE PREFERRED EMBODIMENT

Hereinafter, embodiment of the present invention is concretely explained with reference to the accompanying drawings.

[Embodiment 1]

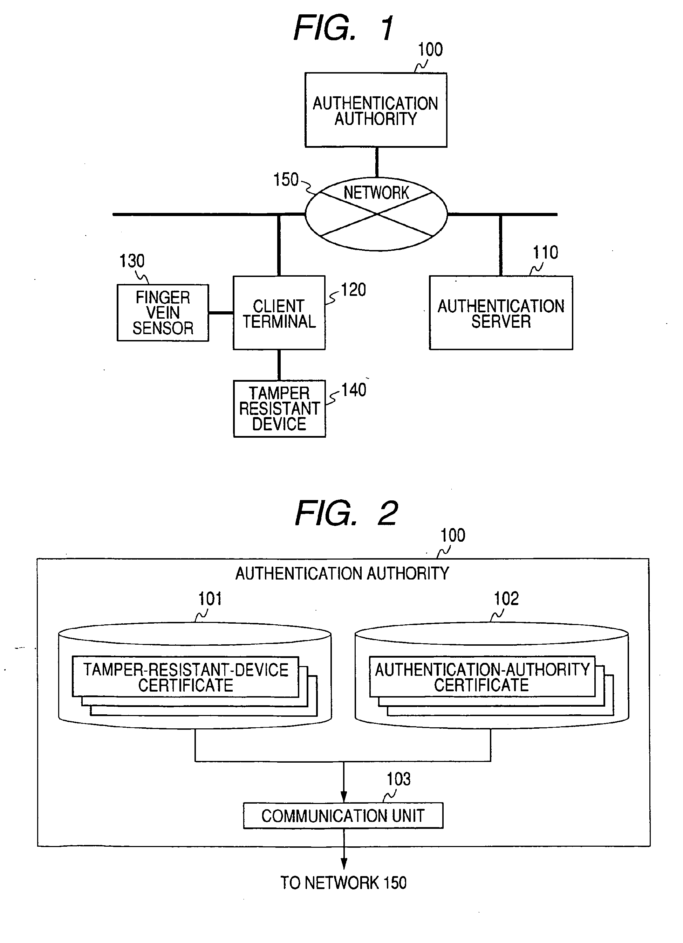

The cancelable finger vein authentication system according to a first embodiment is explained with reference to Figs. 1 to 7 in the following. The cancelable finger vein authentication system performs a finger vein verification using a difference parameter within an authentication server keeping a finger vein image secret to the server. Here, the difference parameter is a parameter to perform updating for a template which has been registered in a server while kept secret as mentioned above, where the updating is performed in the server keeping the template secret. A client holds the difference parameter corresponding to the template after updating, and executes transformation using this difference parameter at the time of authentication.

In addition, the implementation methods of the difference parameter vary by class of the cancelable biometric authentication. For example, in a case of fingerprint authentication, the implementation method of the difference parameter is as follows. In the cancelable fingerprint-authentication, the feature point called a Minutia is transformed by executing geometric transformation, such as a coordinate rotation and a direction rotation, with a distance between Minutiaes kept unchanged. Parameters are concrete numerical values in the geometric transformation, such as an angle of the coordinate rotation, and an angle of the direction rotation. In this case, the difference parameter is the difference of the concrete numerical values before and after updating of a template in geometric transformation. The difference parameter in the finger vein authentication is a difference random filter as explained in detail in the following.

Fig. 1 illustrates the whole composition of a cancelable finger vein authentication system according to the first embodiment.

As clearly seen from Fig. 1, the cancelable finger vein authentication system of the present embodiment is composed of an authentication authority 100, an authentication server 110, a client terminal 120, a finger vein sensor 130, a tamper resistant device 140, and a network 150. The authentication authority 100, the authentication server 110, and the client terminal 120 are connected to the network 150. The finger vein sensor 130 and the tamper resistant device 140 are connected to the client terminal 120.

The authentication authority 100 has a function to publish and hold the public key certificate of the authentication server, to publish and hold the public key certificate of the tamper resistant device, and to output the public key certificate in response to the request from the terminal.

The authentication server 110 holds all users' templates, each of which has been transformed by a random filter as a transformation parameter at the time of registration. The authentication server 110 generates a difference random filter and a difference inverse random filter both of which serve as a difference parameter at the time of authentication, encrypts the difference inverse random filter with the public key of the tamper resistant device, and sends it to the tamper resistant device through the network 150. Then the authentication server 110 creates a temporary registration template by transforming the registration template by the difference random filter which is the difference parameter generated, and verifies whether the temporary registration template and the temporary verification template inputted through the network 150 are in agreement.

At the time of authentication, the client terminal 120 acquires a finger vein image from the finger vein sensor 130, and performs an image processing to extract feature. Then, as will be explained in full detail later, the client terminal 120 acquires, from the tamper resistant device 140, the temporary inverse random filter which is generated by the tamper resistant device 140. With the temporary inverse random filter, the client terminal 120 transforms the feature and sends the transformed feature (temporarily-transformed feature) as a temporary verification template to the authentication server 110 through the network 150.

The tamper resistant device 140 confirms the rightfulness of the authentication server using the public key certificate of the authentication server 110 at the time of authentication. Then, the tamper resistant device 140 decrypts the encrypted difference inverse random filter sent from the authentication server 110, by the secret key of the authentication server 110. The tamper resistant device 140 generates a temporary inverse random filter from the difference inverse random filter as a difference parameter and the inverse random filter currently held, and outputs the temporary inverse random filter generated to the client terminal 120.

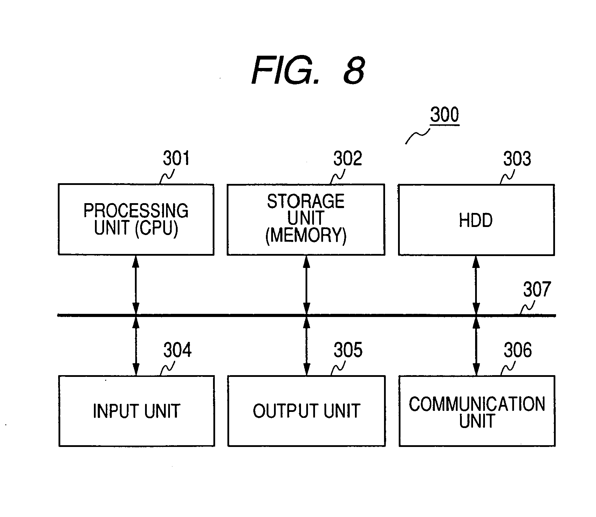

In addition, the authentication server 110 and client terminal 120 etc., in the system structure of the first embodiment illustrated in Fig. 1, possess the structure as a usual computer with respect to the hardware structure. For example, as illustrated in Fig. 8, a computer 300 can be constructed by a processing unit (CPU) 301, a storage unit (memory) 302, a hard disk drive (HDD) 303, an input unit 304, an output unit 305, and a communication unit 306, all units being connected each other through an internal bus 307 etc. The CPU 301 executes the programs stored in the memory 302 etc. These programs may be obtained from the exterior, if needed, through the supply with a storage medium, the distribution via a network, and others, for example.

Fig. 2 is a block diagram illustrating a functional composition of the authentication authority 100.

The authentication authority 100 publishes a public key certificate to the authentication server 110 at the time of installing the authentication server 110, and holds the public key certificate in a storage unit 102. Similarly, the authentication authority 100 publishes a public key certificate to the tamper resistant device 140 at the time of registering a user, and holds the public key certificate in a storage unit 101. At the time of authentication, the authentication authority 100 outputs the public key certificate of the tamper resistant device 140 to the authentication server 110 in response to the request from the authentication server 110, and outputs the public key certificate of the authentication server 110 to the client terminal 120 in response to the request from the client terminal 120. When the requests described above do not arise at the time of authentication, there is no need to output these public key certificates. In addition, the authentication authority 100 includes a communication unit (transmitter/receiver) 103.

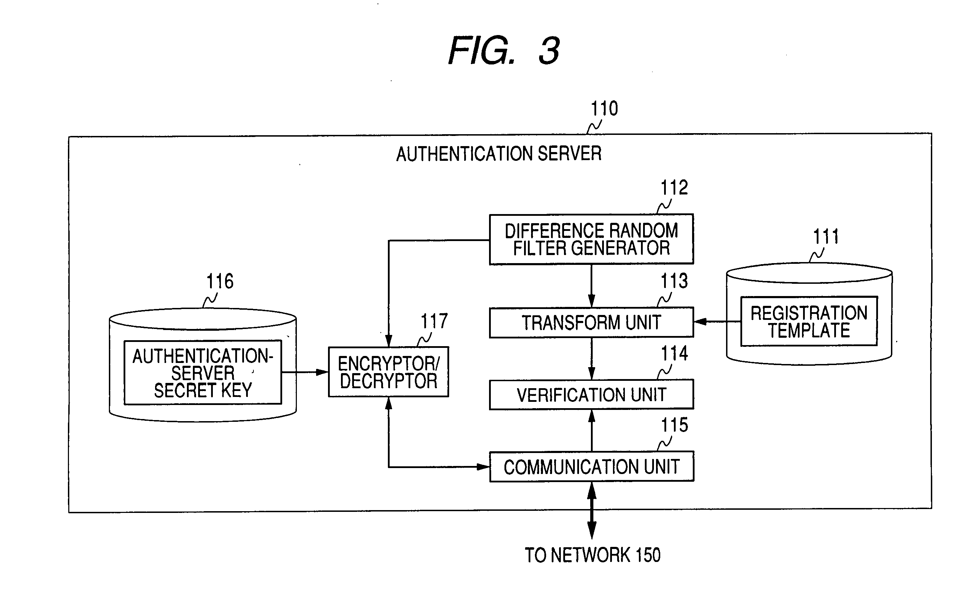

Fig. 3 is a block diagram illustrating a functional composition of the authentication server 110.

The authentication server 110 holds finger vein registration templates for all users in the storage unit 111. At the time of authentication, in order to confirm the rightfulness, an encryptor/decryptor 117 encrypts the random number transmitted from the client terminal 120 through a communication unit (transmitter/receiver) 115, using the secret key of the authentication server 110. Then, the authentication server 110 sends back the encrypted random number to the client terminal 120 through the communication unit 115 and the network 150.

When the rightfulness of the authentication server 110 can be confirmed in the client terminal 120, a difference random filter generator 112, which is a difference parameter generator of the authentication server 110, generates a difference random filter $\Delta K$ and a difference inverse random filter $\Delta K^{-1}$, which serve as difference parameters. Then, a transform unit 113 which is a temporary-registration-template generator transforms user's registration template held by a storage unit 111 using the difference random filter $\Delta K$ and generates a temporary registration template. A verification unit 114 verifies whether this temporary registration template agrees with the temporary verification template (temporarily-transformed feature) transmitted from the client terminal 120. When the verification value is less than a given threshold, the user is judged to be identical.

In addition, as mentioned above, the authentication server 110 is generally a computer system which possesses structure as illustrated in Fig. 8. The difference random filter generator 112, the transform unit 113, the verification unit 114, and the encryptor/decryptor 117, which are functional blocks, can be composed by programs executed by the CPU 301 as illustrated in Fig. 8. In this case, these programs are generally stored in the memory 302 or the HDD 303. Needless to say, these programs may be alternatively provided to the interior of the computer from a storage medium, or via the communication unit 115 from a network, if needed. This applies equally to the client terminal 120 described below, as well.

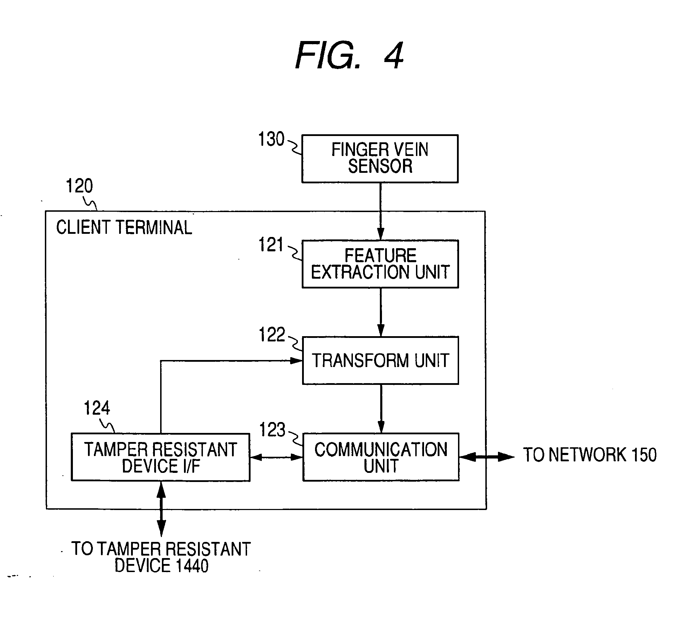

Fig. 4 is a block diagram illustrating a functional composition of the client terminal 120.

At the time of authentication, the client terminal 120 transmits the random number which has been inputted from a tamper resistant device 140 via a tamper-resistant-device I/F (input/output unit) 124, to the authentication server 110 through the network 150 via a communication unit (transmitter/receiver) 123. Then, the client terminal 120 receives the random number encrypted with the secret key of the authentication server 110 from the authentication server 110, and outputs the encrypted random number to the tamper resistant device 140 through the tamper-resistant-device I/F 124. When the rightfulness of the authentication server is confirmed in the tamper resistant device 140, the client terminal 120 receives a difference inverse random filter $\Delta K^{-1}$ which is the encrypted difference parameter from the authentication server 110. The client terminal 120 transmits the received difference inverse random filter $\Delta K^{-1}$ to the tamper resistant device 140 in the similar way, and subsequently receives a temporary inverse random filter $K'^{-1}$ generated by the tamper resistant device 140.

Then, the client terminal 120 acquires a finger vein image from the finger vein sensor 130. A feature extraction unit 121 performs feature extraction from the finger vein image, to generate a verification feature F. A transform unit 122 transforms the verification feature F using the temporary inverse random filter $K'^{-1}$, to generate a temporary verification template $K'^{-1}F$. Then, the client terminal 120 transmits the temporary verification template $K'^{-1}F$ to the authentication server 110 through the network 150.

In addition, the feature extraction unit 121 and the transform unit 122 in the functional block diagram shown in Fig. 4 may be realized by executing a program in the CPU as previously explained with reference to Fig. 8, or alternatively they may be composed of dedicated hardware.

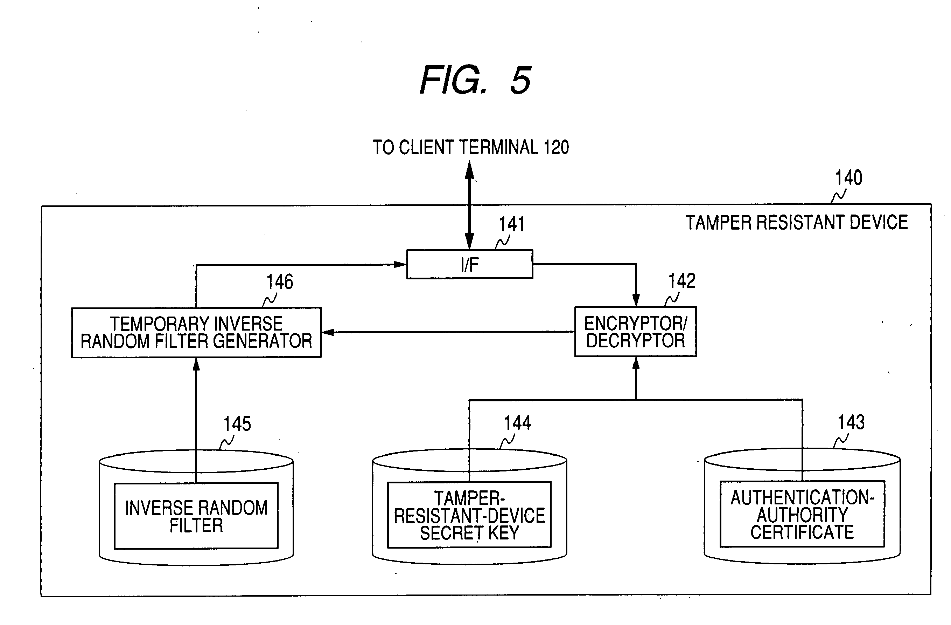

Fig. 5 is a block diagram illustrating a functional composition of the tamper resistant device 140. Here, the tamper resistant device is a device of which the contents of the instruments and circuitry are difficult to be analyzed from the outside. The technology which may enhance tamper resistance includes logical technology and physical technology. The logical technology includes an obfuscation technology which makes analysis by disassembling etc. difficult. The physical technology includes technology in which, when a protection layer is removed in order to analyze a circuit, an internal circuit is destroyed as well. Especially, there is technology in which, when a package is broken to expose a circuit pattern or the like, the contents of the memory which stores the encryption key data, the program, or the like are rendered eliminated. In the present embodiment, the device which is installed with such technology is called the tamper resistant device. An IC card is one of examples of the tamper resistant device. This IC card possesses a CPU and a memory at least.

Now, the tamper resistant device 140 directs the authentication authority 100 to publish a public key certificate at the time of issue, and stores the published secret key in a storage unit 144. Moreover, the tamper resistant device 140 also stores the public key certificate of the authentication server 110 in a storage unit 143. At the time of user registration, the tamper resistant device 140 stores in a storage unit 145 an inverse random filter $K^{-1}$ which is a transformation parameter. At the time of user authentication, an encryptor/decryptor 142 generates a random number and transmits it to the client terminal 120. The client terminal 120 transmits the random number to the authentication server 110 through the network 150. The authentication server 110 encrypts the random number with the possessing secret key, and transmits the encrypted random number to the client terminal 120. The client terminal 120 transmits the encrypted random number received to the tamper resistant device 140.

The encryptor/decryptor 142 of the tamper resistant device 140 decrypts the encrypted random number received with the public key of the authentication server 110 stored in the storage unit 143. The tamper resistant device 140 confirms that the decrypted random number is in agreement with the random number transmitted first. When in agreement, the authentication server 110 is verified to be right, therefore, the tamper resistant device 140 requests a difference inverse random filter $\Delta K^{-1}$ which is a parameter, for the client terminal 120. When not in agreement, the tamper resistant device 140 terminates processing. The client terminal 120, upon receiving the request from the tamper resistant device 140, requests a difference inverse random filter $\Delta K^{-1}$ for the authentication server 110.

Upon receiving the request from the client terminal 120, the authentication server 110 acquires a tamper-resistant-device public key certificate from the authentication authority 100, encrypts the difference inverse random filter $\Delta K^{-1}$ with the public key of the tamper resistant device, and transmits the encrypted difference inverse random filter $\Delta K^{-1}$ to the client terminal 120. The client terminal 120 receives the encrypted difference inverse random filter $\Delta K^{-1}$ and outputs it to the tamper resistant device 140. The encryptor/decryptor 142 of the tamper resistant device 140 decrypts the encrypted difference inverse random filter $\Delta K^{-1}$ received, with the secret key possessed by the storage unit 144. The temporary inverse random filter generator 146 of the tamper resistant device 140 generates a temporary inverse random filter $K'^{-1}$ from the difference inverse random filter $\Delta K^{-1}$ and the inverse random filter $K^{-1}$ held as the transformation parameter. The tamper resistant device 140 transmits the temporary inverse random filter $K'^{-1}$ to the client terminal 120.

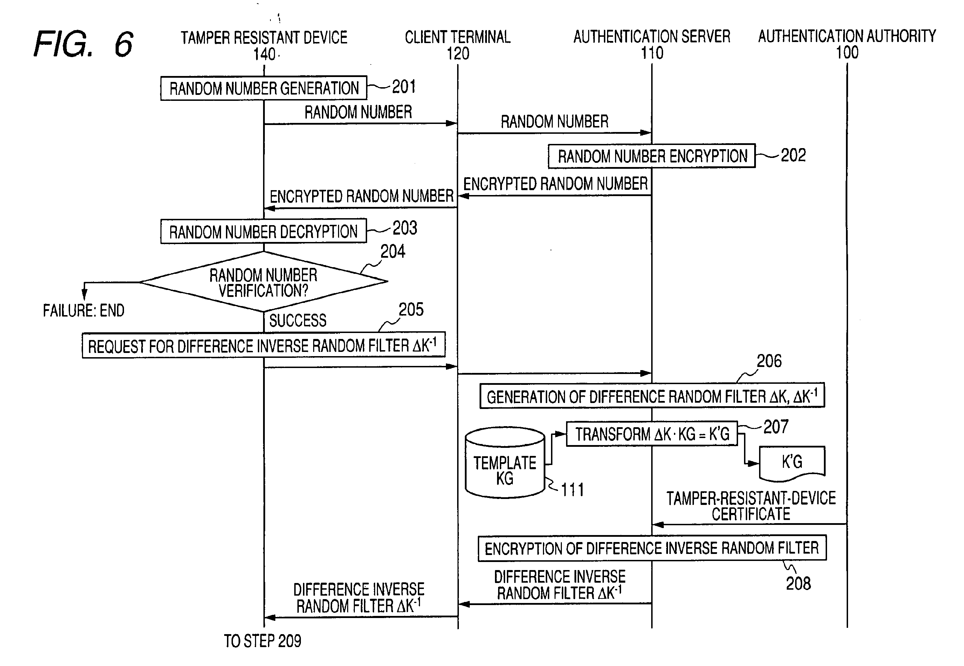

Fig. 6 illustrates the anterior half of flow at the time of authentication in the cancelable finger vein authentication system according to the first embodiment.

At Step 201 of Fig. 6, the tamper resistant device 140 generates a random number, and outputs the random number to the client terminal 120. The client terminal 120 transmits the received random number to the authentication server 110.

At Step 202, the authentication server 110 encrypts the received random number with the possessing secret key, and transmits the encrypted random number to the client terminal 120. The client terminal 120 outputs the encrypted random number received to the tamper resistant device 140.

At Step 203, the tamper resistant device 140 decrypts the encrypted random number received, with the possessing public key of the authentication server 110.

At Step 204, the tamper resistant device 140 verifies whether the decrypted random number is in agreement with the random number which has been transmitted first. When the verification is successful, the authentication server is judged right and the processing advances to Step 205. When the verification is not successful, the authentication server is judged not right and the processing is terminated.

At Step 205, the tamper resistant device 140 requests the difference inverse random filter which is a difference parameter, for the client terminal 120. In response to the request, the client terminal 120 requests the difference inverse random filter for the authentication server 110.

At Step 206, the authentication server 110 generates the difference random filter $\Delta K$ and the difference inverse random filter $\Delta K^{-1}$. Here, $\Delta K$ and $\Delta K^{-1}$ are the filters in a 2-dimensional frequency space, and possess components in each of coordinates (u, v) in the frequency space. Therefore, the components of $\Delta K$ and $\Delta K^{-1}$ are written as $\Delta K(u, v)$ and $\Delta K^{-1}(u, v)$, respectively.

The generation method of $\Delta K(u, v)$ and $\Delta K^{-1}(u, v)$ is as follows. First, in the generation of $\Delta K(u, v)$, a random number is generated for every component, and the generated value is adopted. Next, in the generation of $\Delta K^{-1}(u, v)$, the values are determined so that $\Delta K(u, v)$ and $\Delta K^{-1}(u, v)$ may satisfy the following equation.

[Equation 1]

$$\Delta K(u, v) \cdot \Delta K^{-1}(u, v) = 1$$

As another generation procedure, random numbers may be generated for $\Delta K^{-1}(u, v)$ first, and $\Delta K(u, v)$ is determined so that $\Delta K(u, v)$ and $\Delta K^{-1}(u, v)$ may satisfy Equation 1.

At Step 207, the authentication server 110 transforms a registration template KG, using the difference random filter $\Delta K$ as the generated difference parameter, and generates a temporary registration template K'G. Here, the registration template KG is a vector in the 2-dimensional frequency space, and hence KG is written as K(u, v)G(u, v). Here, K(u, v) is a random filter as a transformation parameter. Moreover, the temporary transformation parameter K' is also a vector in the 2-dimensional frequency space, and hence K' is written as K'(u, v). At this time, the transformation by the difference random filter $\Delta K(u, v)$ follows the next equation.

[Equation 2]

$$K'(u, v) \, G(u, v) = \Delta K(u, v) \cdot K(u, v) \, G(u, v)$$

In this equation, the difference random filter ΔK(u, v) is multiplied to the registration template K(u, v)G(u, v). Thereby, concealing the original feature G(u, v), the registration template K(u, v)G(u, v), which is a state of disturbance of the feature disturbed by the transformation parameter K(u, v), can be mapped into a temporary registration template K'(u, v)G(u, v), which is another state of disturbance. In this way, the temporary registration template K'(u, v)G(u, v) is generated.

Next, at Step 208, the authentication server 110 acquires the public key certificate of the tamper resistant device from the authentication authority 100, and encrypts the difference inverse random filter ΔK$^{-1}$ (u, v) using the present public key. Then, the authentication server 110 transmits the encrypted difference inverse random filter ΔK$^{-1}$ (u, v) to the client terminal 120. The client terminal 120 outputs the encrypted difference inverse random filter ΔK$^{-1}$(u, v) received, to the tamper resistant device 140.

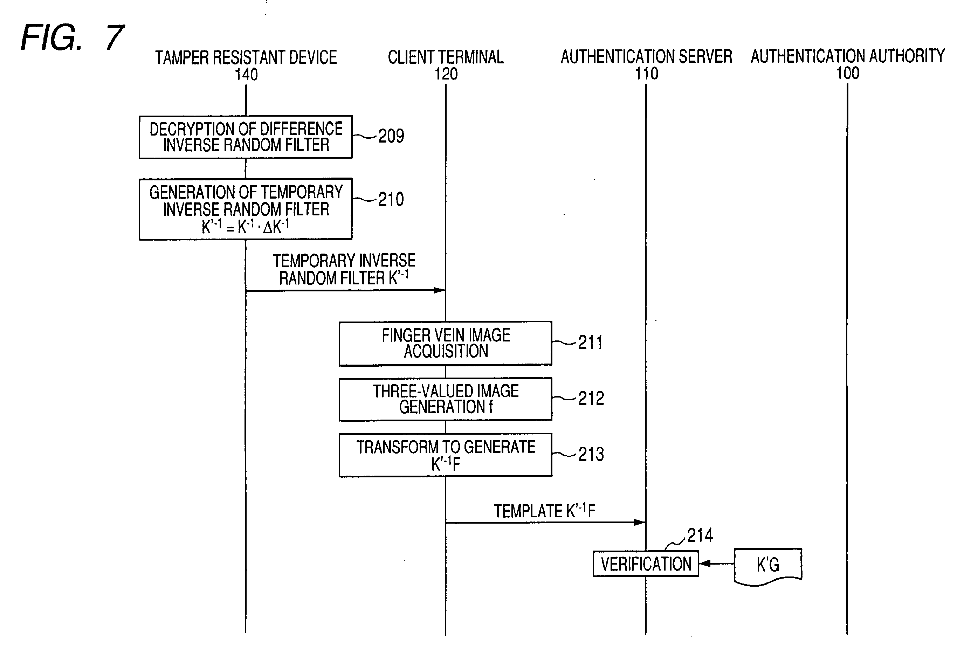

Fig. 7 is a posterior half of the flow chart at the time of authentication for the cancelable finger vein authentication system according to the first embodiment. The flow chart illustrated in Fig. 7 continues the flow chart illustrated in Fig. 6. At Step 209, the tamper resistant device 140 decrypts the encrypted difference inverse random filter ΔK$^{-1}$(u, v) received, using the possessing secret key.

At Step 210, the tamper resistant device 140 generates a temporary inverse random filter K'$^{-1}$(u, v), from the difference inverse random filter ΔK$^{-1}$(u, v) and the inverse random filter K$^{-1}$(u, v). Here, since the inverse random filter and the temporary inverse random filter are vectors in the 2-dimensional frequency space, they are written as K$^{-1}$ (u, v) and K'$^{-1}$(u, v), respectively. At this time, the temporary inverse random filter K'$^{-1}$(u, v) is generated by the following equation.

[Equation 3]

$$K'^{-1}(u, v) = \Delta K^{-1}(u, v) \cdot K^{-1}(u, v)$$

In this equation, the difference inverse random filter ΔK$^{-1}$(u, v) is multiplied to the inverse random filter K$^{-1}$(u, v) to compute the temporary inverse random filter K'$^{-1}$ (u, v). Thereby, the temporary inverse random filter K'$^{-1}$(u, v) can be generated as a random filter corresponding to the temporary registration template which is held by the authentication server 110. Moreover, since the operation is executed within the tamper resistant device 140, there is a merit that the inverse random filter K$^{-1}$(u, v) can be kept secret to the client terminal 120. Then, the tamper resistant device 140 transmits to the client terminal 120 the temporary inverse random filter K'$^{-1}$(u, v) which is the generated temporary transformation parameter.

At Step 211, the client terminal 120 acquires a finger vein image from the finger vein sensor 130. At Step 212, the client terminal 120 extracts feature of the finger vein image to generate a finger vein pattern. Here, the finger vein pattern is written as f(x, y) because it is a 2-dimensional image.

At Step 213, the client terminal 120 transforms the finger vein pattern f(x, y), using the temporary inverse random filter K'$^{-1}$(u, v) which is the temporary transformation parameter. First, the client terminal 120 performs Fourier transformation of the finger vein pattern f(x, y) to generate F(u, v). Here, F(u, v) is the Fourier component of f(x, y), and a vector in a 2-dimensional frequency space. Next, the client terminal 120 multiplies F(u, v) by the temporary inverse random filter K'$^{-1}$(u, v), component to component, to generate a temporary verification template K'$^{-1}$(u, v)F(u, v). Then, the client terminal 120 transmits the temporary verification template K'$^{-1}$(u, v)F(u, v) to the authentication server 110.

At Step 212, the authentication server 110 verifies whether the received temporary verification template K'$^{-1}$(u, v)F(u, v) is in agreement with the temporary registration template K'(u, v)G(u, v) which has been generated at Step 207. In the verification processing, K'(u, v)G(u, v) and K'$^{-1}$(u, v)F(u, v) are first multiplied, element by element. Here, the transformation parameters K(u, v) and K$^{-1}$ (u, v) are determined so that the following equation is satisfied, at the time of registration.

[Equation 4]

$$K^{-1}(u, v) K(u, v) = 1$$

In this equation, the transformation parameter K$^{-1}$(u, v) is an inverse element of K (u, v) in multiplication. Thereby, it is possible to make the product of the registration template K(u, v)G(u, v) and the verification template K$^{-1}$(u, v)F(u, v) in agreement with the product of the registration feature G (u, v) and the verification feature F(u, v). Accordingly, the above-described feature leads to effects that allow the disturbance of the feature (G(u, v) and F(u, v)) by the random filter ($K(u, v)$ and $K^{-1}(u, v)$), keeping the verification value unchanged and maintaining the authentication accuracy. That is, the following equation can be derived from Equation 1 and Equation 4.

[Equation 5]

$$K'^{-1}(u, v) \; F(u, v) \cdot K'(u, v) \; G(u, v)$$

$$= \Delta K^{-1}(u, v) \; \Delta K(u, v) \cdot K^{-1}(u, v) \; K(u, v) \cdot F(u, v) \cdot G(u, v)$$

$$= F(u, v) \cdot G(u, v)$$

As clearly seen from Equation 5, the product of the temporary registration template $K'(u, v)G(u, v)$ and the temporary verification template $K'^{-1}(u, v)F(u, v)$ is in agreement with the product of the registration feature $G(u, v)$ and the verification feature $F(u, v)$. Accordingly, it becomes possible to disturb the feature ($G(u, v)$ and $F(u, v)$) in the temporary template ($K'(u, v)G(u, v)$ and $K'^{-1}(u, v)F(u, v)$), keeping the verification value unchanged and maintaining the authentication accuracy.

When the above equation is inverse-Fourier-transformed, the cross-correlation function $w(p, q)$ of $f(x, y)$ and $g(x, y)$ can be obtained. The greatest value of the cross-correlation function $w(p, q)$ is assumed to be a verification value. When this verification value exceeds a given threshold, the user is judged to be identical. It should be noted that the calculation of the cross-correlation function $w(p, q)$ of $f(x, y)$ and $g(x, y)$ is carried out, concealing the feature $G(u, v)$ and $F(u, v)$ which are biometric information to the authentication server 110. Thereby, it is allowed to perform the verification, concealing $G(u, v)$ and $F(u, v)$ from the authentication server 110.

In the present embodiment described above, even if the registration template is leaked out from the authentication server, the impersonation by use of the leaked-out registration template can be prevented by employing the registration and verification templates which are created temporarily at the time of authentication. Moreover, since the tamper resistant device generates the temporary inverse random filter which is the temporary transformation parameter, and since the client terminal transforms the finger vein pattern using the temporary inverse random filter, the inverse random filter which is the transformation parameter does never leak out, thereby preventing restoration of the original finger vein pattern from the leaked-out registration template.

Based on the above-described scheme, a cancelable finger vein authentication system with high security and a high privacy protection effect can be realized.

In addition, the present invention described above is applicable to an arbitrary biometric authentication system which performs verification by registering biometric information into a server. For example, the present invention is applicable to such instances as the access control to information in an in-company network, the identification of individuals in an Internet banking system or ATM, the login to the Web site for members, the verification of individuals at the time of entrance to a protection area, and others.

**Claims**

1. A user authentication system comprising:

an authentication server (110) operable to authenticate a user based on biometric information acquired by a client terminal (120); and
a tamper resistant device (140),
wherein the tamper resistant device includes:

a temporary parameter generator (146) operable to hold a parameter and to generate a temporary parameter from the parameter and a difference parameter; and
an output unit (141) operable to output the temporary parameter to the client terminal (120),
wherein the authentication server (110) includes:
a storage unit (111) operable to store a registration template created by transforming the biometric information with the parameter;

a difference parameter generator (112) operable to generate the difference parameter;
a transform unit (113) operable to transform the registration template into a temporary registration template with the difference parameter; and
a verification unit (114) operable to verify whether the temporary verification template inputted from the client terminal (120) and the temporary registration template are in agreement, and
wherein the client terminal (120) includes:
an input unit (124) operable to receive the temporary parameter from the tamper resistant device (140);
a transform unit (122) operable to transform the biometric information at the time of authentication into the temporary verification template using the temporary parameter; and
an output unit (123) operable to output the temporary verification template to the authentication server (110).

2. The system of claim 1, wherein the tamper resistant device (140) further includes a storage unit (143, 144) operable to store a public key certificate of the authentication server (110) published by the authentication authority and a secret key of the tamper resistant device (140).

3. An authentication server to authenticate a user based on biometric information, the authentication server (110) comprising:

a storage unit (111) operable to store a registration template created by transforming the biometric information with a parameter;
a difference parameter generator (112) operable to generate a difference parameter;
a transform unit (113) operable to transform the registration template into a temporary registration template with the difference parameter; and
a verification unit (114) operable to verify whether a temporary verification template inputted from a client terminal (120) at the time of authentication and the temporary registration template are in agreement.

4. The server of claim 3, further comprising an encryptor/decryptor (117) operable to encrypt the difference parameter using a public key certificate of a tamper resistant device (140) and to output the encrypted difference parameter.

5. The server of claim 4, wherein
the storage unit (111) is adapted to store a secret key of the authentication server (110), and
the encryptor/decryptor (117) is adapted to encrypt a random number transmitted from the tamper resistant device (140) with the secret key and output the encrypted random number.

6. The server of claim 5, wherein the authentication server (110) is adapted to output the encrypted random number and subsequently output the encrypted difference parameter after the tamper resistant device (140) has verified the rightness of the authentication server (110).

7. A terminal employed in a user authentication system which authenticates a user based on biometric information and designed to acquire the biometric information, the terminal comprising:

an input/output unit (124) operable to receive a temporary parameter generated using a difference parameter from a tamper resistant device (140);
a feature extraction unit (121) operable to extract the biometric information at the time of authentication;
a transform unit (122) operable to transform the biometric information into a temporary verification template using the temporary parameter; and
a transmitter/receiver (123) operable to transmit the temporary verification template to the authentication server (110).

8. The terminal of claim 7, wherein the terminal is adapted to transmit a random number which is inputted from the tamper resistant device (140) through the input/output unit (124), to the authentication server (110) through the transmitter/receiver (123), and upon receiving an encrypted random number transmitted by the authentication server (110) through the transmitter/receiver, the terminal is adapted to output the encrypted random number to the tamper resistant device (140) through the input/output unit.

9. The terminal of claim 7, wherein the terminal is adapted to receive the encrypted difference parameter from the authentication server (110) through the transmitter/receiver (123), and output the encrypted difference parameter received to the tamper resistant device (140) through the transmitter/receiver.

**10.** The terminal of claim 7, wherein the feature extraction unit (121) is supplied with the output of a finger vein sensor and is adapted to extract finger vein information as the biometric information, and wherein the difference parameter is preferably a difference random filter.

**11.** A tamper resistant device employed in a user authentication system in which a server (110) is adapted to authenticate a user based on biometric information acquired at a terminal (120), the tamper resistant device (140) comprising:

a storage unit (143, 144) operable to store a parameter;
a temporary parameter generator (146) operable to generate a temporary parameter from the parameter and a difference parameter; and
an input/output unit (141) operable to output the generated temporary parameter to the terminal (120).

**12.** The device of claim 11, wherein the storage unit (143, 144) is adapted to store a secret key of the tamper resistant device (140) and a public key certificate of the server (110).

**13.** The subject matter of claim 2 or 12, wherein the tamper resistant device (140) further includes an encryptor/decryptor (142) operable to verify the rightness of the authentication server (110) using the public key certificate of the authentication server (110), and to decrypt the encrypted difference parameter with the secret key of the tamper resistant device (140).

**14.** The subject matter of claim 13, wherein the tamper resistant device (140) is adapted to request the encryptor/decryptor to transmit the encrypted difference parameter, after the verification of the rightness of the authentication server (110) in the encryptor/decryptor (142).

**15.** The subject matter of any of claims 1, 3 and 11, wherein the biometric information is finger vein information, and the parameter is a random filter.

## FIG. 1

AUTHENTICATION
AUTHORITY
100

150
NETWORK

130
FINGER
VEIN
SENSOR

CLIENT
TERMINAL
120

AUTHENTICATION
SERVER
110

TAMPER
RESISTANT
DEVICE
140

## FIG. 2

100

AUTHENTICATION AUTHORITY

101
TAMPER-RESISTANT-DEVICE
CERTIFICATE

102
AUTHENTICATION-AUTHORITY
CERTIFICATE

103
COMMUNICATION UNIT

TO NETWORK 150

# FIG. 3

AUTHENTICATION SERVER — 110

- DIFFERENCE RANDOM FILTER GENERATOR — 112
- REGISTRATION TEMPLATE — 111
- TRANSFORM UNIT — 113
- AUTHENTICATION-SERVER SECRET KEY — 116
- ENCRYPTOR/DECRYPTOR — 117
- VERIFICATION UNIT — 114
- COMMUNICATION UNIT — 115

TO NETWORK 150

EP 1 912 154 A2

# FIG. 4

130 ~ FINGER VEIN SENSOR

120

CLIENT TERMINAL

121 ~ FEATURE EXTRACTION UNIT

122 ~ TRANSFORM UNIT

124 ~ TAMPER RESISTANT DEVICE I/F

123 ~ COMMUNICATION UNIT

TO NETWORK 150

TO TAMPER RESISTANT DEVICE 1440

## FIG. 5

140

TAMPER RESISTANT DEVICE

141

I/F

146

TEMPORARY INVERSE
RANDOM FILTER GENERATOR

142

ENCRYPTOR/
DECRYPTOR

145

INVERSE RANDOM
FILTER

144

TAMPER-
RESISTANT-DEVICE
SECRET KEY

143

AUTHENTICATION-
AUTHORITY
CERTIFICATE

FIG. 6

# FIG. 7

| TAMPER RESISTANT DEVICE 140 | CLIENT TERMINAL 120 | AUTHENTICATION SERVER 110 | AUTHENTICATION AUTHORITY 100 |

DECRYPTION OF DIFFERENCE INVERSE RANDOM FILTER — 209

GENERATION OF TEMPORARY INVERSE RANDOM FILTER $K'^{-1} = K^{-1} \cdot \Delta K^{-1}$ — 210

TEMPORARY INVERSE RANDOM FILTER $K'^{-1}$

FINGER VEIN IMAGE ACQUISITION — 211

THREE-VALUED IMAGE GENERATION f — 212

TRANSFORM TO GENERATE $K'^{-1}F$ — 213

TEMPLATE $K'^{-1}F$

VERIFICATION — 214 ← K'G

EP 1 912 154 A2

# FIG. 8

**EP 1 912 154 A2**

**REFERENCES CITED IN THE DESCRIPTION**

*This list of references cited by the applicant is for the reader's convenience only. It does not form part of the European patent document. Even though great care has been taken in compiling the references, errors or omissions cannot be excluded and the EPO disclaims all liability in this regard.*

**Non-patent literature cited in the description**

- **N. K. RATHA ; J. H. CONNELL ; R. M. BOLLE.** Enhancing security and privacy in biometrics-based authentication systems. *IBM Systems Journal,* 2001, vol. 40 (3